# DEMANDE DE BREVET EUROPEEN

(11) **EP 1 452 898 A1**
(43) Date de publication de la demande: **01.09.2004**
(21) Numéro de dépôt: 04290473.0
(22) Date de dépôt: 20.02.2004
(51) Int. Cl.: G02B 6/44

(54) **Isolateur électrique**

(30) Priorité: 25.02.2003 FR 0302263
(71) Demandeur: ALCATEL, 75008 Paris (FR)
(72) Inventeur: Bonicel, Jean-Pierre, 92500 Rueil Malmaison (FR); Le Gac, Renaud, 92600 Asnières (FR)
(74) Mandataire: Lamoureux, Bernard

(57) **Abrégé**

L'invention concerne le domaine des isolateurs électriques et en particulier le domaine des isolateurs électriques pour câble de phase dits OPPC.

C'est un isolateur électrique comportant un barreau diélectrique (1) comprenant au moins une fente (10), un câble (2) souple à fibres optiques situé dans la fente (10), un matériau (8) diélectrique de remplissage de la fente (10) et de maintien, sans contrainte, du câble (2) dans la fente (10), un revêtement (3) diélectrique entourant le barreau (1) et présentant, vers l'extérieur, des protubérances (30) en forme de jupes, tout l'espace situé entre le barreau (1) et le câble (2) étant rempli par ledit matériau (8) diélectrique de remplissage et de maintien.

## Description

L'invention concerne le domaine des isolateurs électriques et en particulier le domaine des isolateurs électriques pour câble de phase (OPPC pour « OPtical Phase Conductor » en terminologie anglo-saxonne). L'invention concerne également le domaine des systèmes associant un isolateur électrique à au moins un câble de phase. Ce type d'isolateur électrique a pour fonction d'assurer le passage d'un signal optique d'une extrémité à l'autre dudit isolateur électrique tout en assurant une isolation électrique entre les extrémités dudit isolateur électrique. Ce type d'isolateur électrique permet notamment de raccorder optiquement les câbles de phase du réseau électrique aérien au réseau optique terrestre. A cause de la différence élevée de voltage entre le réseau électrique aérien et le réseau optique terrestre, l'isolation électrique doit être particulièrement bonne et fiable. Les isolateurs électriques sont habituellement placés en haut des pylônes soutenant les câbles de phase. Les fibres optiques contenues dans les câbles de phase sont raccordées au réseau optique terrestre par l'intermédiaire d'un câble optique appelé microcâble optique reliant le câble de phase au câble du réseau optique terrestre. L'interface entre le microcâble optique et le câble de phase est réalisée par une cassette de rangement des soudures de fibres optiques située dans l'isolateur électrique et l'interface entre le microcâble optique et le câble du réseau optique terrestre est réalisée par une borne de raccordement optique.

Selon un art antérieur décrit dans le brevet américain US 5637827 (voir figure 7 et lignes 1 à 40 de la colonne 7), il est connu un isolateur électrique constitué d'un revêtement diélectrique lui-même constitué de jupes empilées les unes sur les autres et collées les unes aux autres comme sur le barreau diélectrique qu'elles entourent. Ce barreau diélectrique présente une fente dans laquelle est logé un tube plastique de protection lequel entoure un câble à fibres optiques, un matériau de remplissage remplissant les interstices entre le tube et le barreau ainsi qu'entre le tube et le câble.

Afin de réaliser une bonne isolation électrique tout en permettant une transmission optique de bonne qualité, l'isolateur électrique doit, selon l'invention, présenter un bon compromis entre les deux propriétés suivantes, d'une part la fiabilité de l'isolement électrique d'une extrémité à l'autre de l'isolateur électrique afin d'assurer une bonne isolation électrique, d'autre part la qualité de la protection du câble à fibres optiques afin d'assurer une transmission optique de bonne qualité. Or, ces deux propriétés peuvent présenter des exigences à priori contradictoires. En effet, tandis que la fiabilité de l'isolement électrique exige le moins d'éléments possibles au sein de l'isolateur électrique et le moins d'interfaces possible entre lesdits éléments, la qualité de la protection du câble à fibres optiques semble au contraire requérir des éléments supplémentaires de protection. Aussi bien la fiabilité de l'isolement électrique que la qualité de la protection du câble à fibres optiques passent par une bonne protection du barreau diélectrique entourant le câble à fibres optiques.

Dans l'art antérieur précité, la protection du câble à fibres optiques est correcte mais la fiabilité de l'isolement électrique de l'isolateur électrique est insuffisante. Afin d'améliorer le compromis entre la fiabilité de l'isolement électrique de l'isolateur électrique et la qualité de la protection du câble à fibres optiques, l'une des innovations de l'invention consiste à s'affranchir du tube de protection du câble à fibres optiques. Plusieurs modes de réalisation avantageux, sans ledit tube de protection, réalisent de meilleurs compromis que l'art antérieur précité.

Dans un premier mode de réalisation représenté à la figure 4, le tube de protection est purement supprimé. Les jupes du revêtement sont toujours empilées et collées. Les jupes du revêtement étant collées sur le barreau diélectrique, il a été mis en évidence qu'elles exerçaient une pression modérée sur le barreau diélectrique, sur le matériau de remplissage et sur le câble à fibres optiques et que le tube de protection était inutile. La suppression du tube de protection ainsi que d'une interface, interface entre le câble et le barreau seulement au lieu des deux interfaces respectivement entre le câble et le tube d'une part et entre le tube et le barreau d'autre part, améliore la fiabilité de l'isolement électrique de l'isolateur électrique sans dégrader notablement la qualité de la protection du câble à fibres optiques.

Dans un deuxième mode de réalisation représenté à la figure 5, plus avantageux que le premier mode de réalisation précédemment décrit, le tube de protection entourant le câble à fibres optiques est supprimé et remplacé par un tube intermédiaire situé entre le barreau et le revêtement. Les jupes du revêtement sont toujours empilées et collées. La qualité de la protection du câble à fibres optiques est comparable à celle de l'art antérieur précité. Toutefois, quoique les nombres d'éléments et d'interfaces entre éléments restent les mêmes, la fiabilité de l'isolement électrique de l'isolateur électrique est améliorée car le barreau est mieux protégé du milieu extérieur grâce à la présence du tube intermédiaire pouvant pallier d'éventuels défauts de joint entre les jupes empilées les unes sur les autres en isolant mieux le barreau du milieu extérieur. La suppression du tube de protection et son remplacement par un tube intermédiaire situé entre le revêtement et le barreau améliore la fiabilité de l'isolement électrique de l'isolateur électrique tout en conservant une qualité comparable de protection du câble à fibres optiques.

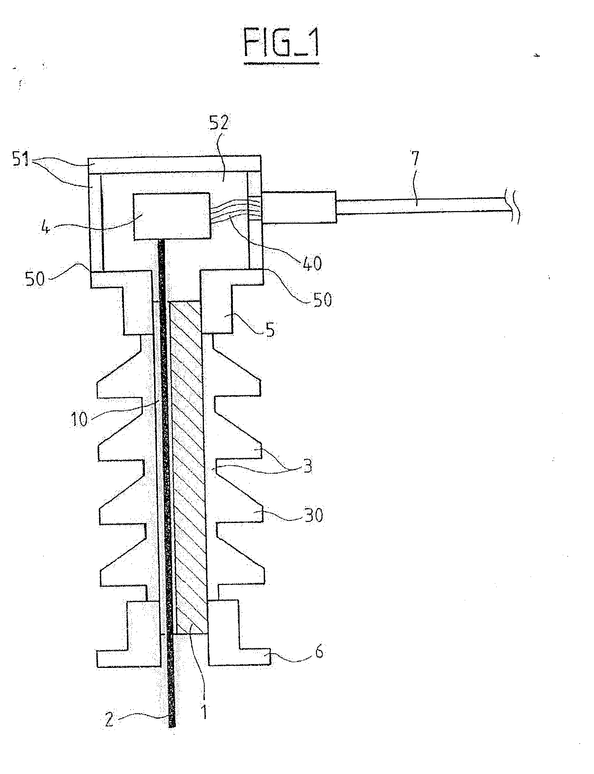

Dans un troisième mode de réalisation préférentiel représenté aux figures 1 à 3, beaucoup plus avantageux que les premier et deuxième modes de réalisation, le tube de protection est supprimé. Le revêtement est monobloc, c'est-à-dire que les jupes du revêtement sont solidaires les unes des autres, et le revêtement est solidaire du barreau et directement en contact avec le barreau. Le revêtement est par exemple moulé sur le barreau. Les jupes du revêtement étant par exemple moulées sur le barreau diélectrique, elles exercent une pression non négligeable sur le barreau diélectrique lors du moulage, sur le matériau de remplissage et sur le câble à fibres optiques. Le tube de protection ainsi que l'augmentation du nombre des interfaces que sa présence entraîne ont été remplacées par une fente plus profonde vers le fond de laquelle se situe le câble à fibres optiques. Le câble à fibres optiques est de préférence situé au fond de la fente ; il est soit en contact direct avec le fond de la fente soit séparé du fond de la fente par un matériau de remplissage de manière à ne pas être en contact direct avec le fond de la fente. Etant plus loin de la périphérie du barreau sur laquelle s'exerce la pression du revêtement et étant séparée de cette pression par une épaisseur plus importante de matériau de remplissage absorbant au moins partiellement les contraintes mécaniques, le câble à fibres optiques est très bien protégé malgré l'absence du tube de protection utilisé dans l'art antérieur précité. Ainsi la qualité de protection du câble à fibres optiques est optimale malgré la pression exercée sur le barreau par le revêtement monobloc, grâce à l'éloignement du câble à fibres optiques, de la périphérie du barreau et à l'épaisseur du matériau de remplissage le séparant de ladite périphérie. Le barreau est très bien protégé grâce à l'aspect monobloc du revêtement qui exclue l'inconvénient d'éventuels joints défectueux entre les jupes du revêtement. Enfin, le nombre d'éléments et d'interfaces entre éléments a été minimisé grâce à l'aspect monobloc du revêtement et grâce à la suppression du tube de protection de l'art antérieur précité. Ce compromis idéal a été obtenu par la combinaison de plusieurs aspects qui sont la suppression du tube de protection de l'art antérieur précité, le remplacement dudit tube de protection par l'éloignement du câble à fibres optiques de la périphérie du barreau obtenu par une fente plus profonde et une disposition du câble à fibres optiques vers le fond de cette fente, ainsi que le caractère monobloc du revêtement par ailleurs directement en contact avec le barreau dont il est aussi solidaire.

Selon l'invention, il est prévu un isolateur électrique comportant un barreau diélectrique comprenant au moins une fente, un câble à fibres optiques situé dans la fente, un matériau diélectrique de remplissage de la fente et de maintien, sans contrainte, du câble dans la fente, un revêtement diélectrique entourant le barreau et présentant, vers l'extérieur, des protubérances en forme de jupes, caractérisé en ce que le câble est souple, et en ce que tout l'espace situé entre le barreau et le câble est rempli par ledit matériau diélectrique de remplissage et de maintien.

Selon l'invention, de préférence, la fente est plus profonde que large, le câble est situé plus près du fond de la fente que de l'ouverture de la fente, et le revêtement est monobloc, solidaire du barreau, et directement en contact avec le barreau.

L'invention sera mieux comprise et d'autres particularités et avantages apparaîtront à l'aide de la description ci-après et des dessins joints, donnés à titre d'exemples, où :
- la figure 1 représente schématiquement une vue de profil d'un troisième mode de réalisation préférentiel d'un isolateur électrique selon l'invention ;
- la figure 2 représente schématiquement une vue en coupe transversale de l'isolateur électrique représenté à la figure 1 ;
- la figure 3 représente schématiquement un agrandissement d'une partie d'une vue en coupe longitudinale de l'isolateur électrique représenté à la figure 1 ;
- la figure 4 représente schématiquement un agrandissement d'une partie d'une vue en coupe longitudinale d'un premier mode de réalisation d'un isolateur électrique selon l'invention ;
- la figure 5 représente schématiquement un agrandissement d'une partie d'une vue en coupe longitudinale d'un second mode de réalisation d'un isolateur électrique selon l'invention ;
- la figure 6 représente schématiquement une vue en coupe transversale d'un mode de réalisation préférentiel du câble situé dans la fente du barreau d'un isolateur électrique selon l'invention.

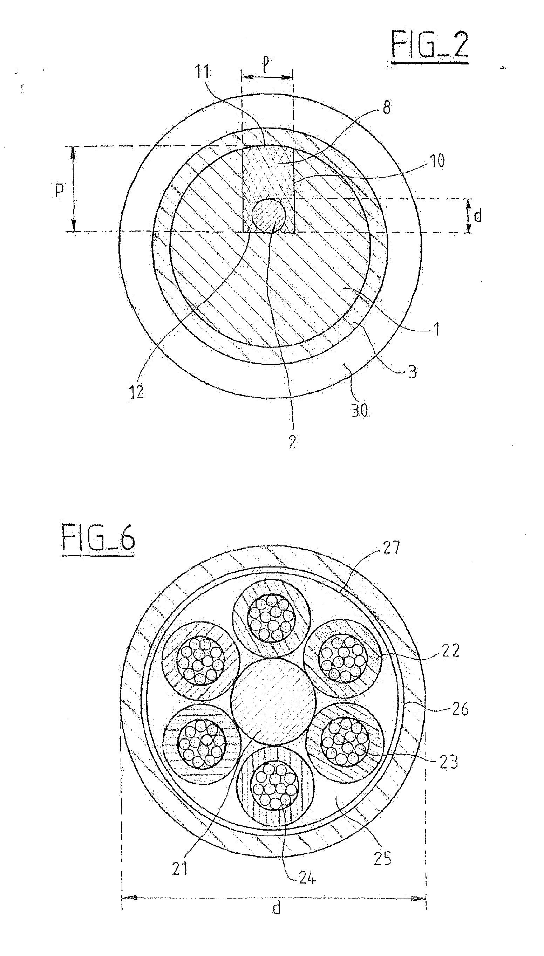

La figure 1 représente schématiquement une vue de profil d'un troisième mode de réalisation préférentiel d'un isolateur électrique selon l'invention. L'isolateur électrique comporte un barreau diélectrique 1. Le barreau 1 est par exemple en fibre de verre. Le barreau 1 est typiquement de forme cylindrique. Le barreau 1 comprend au moins une fente 10 qui s'étend tout le long du barreau 1. Dans la fente 10 est situé un câble 2 à fibres optiques. Tout l'espace situé dans la fente 10, entre le barreau 1 et le câble 2, est rempli par un matériau diélectrique de remplissage de la fente 10 et de maintien sans contrainte du câble 2 dans la fente 10 ; ledit matériau sera détaillé en rapport avec la figure 2.

Un revêtement 3 entoure le barreau 1. Le revêtement 3 présente, vers l'extérieur, des protubérances 30 en forme de jupes. Le revêtement 3 est typiquement en matériau composite, par exemple en silicone ou en EPDM (éthylène propylène terpolymères) ou en un autre matériau synthétique. Le revêtement 3 est monobloc, il est par exemple directement moulé sur le barreau 1. Le revêtement 3 est rendu solidaire du barreau 1, par exemple par vulcanisation. Il n'y a aucune couche intermédiaire d'un autre matériau entre le barreau 1 et le revêtement 3. L'isolateur électrique comporte deux extrémités 5 et 6 entourant les extrémités du barreau 1 et butant contre les extrémités du revêtement 3.

L'extrémité inférieure 6 de l'isolateur électrique est débouchante, le câble 2 sortant par le trou central de l'extrémité inférieure 6 pour aller se raccorder à une borne optique du réseau optique terrestre. La partie du câble 2 débouchant à l'extérieur de l'isolateur électrique par l'extrémité inférieure 6 est typiquement longue de quelques dizaines de mètres, par exemple de 30 à 40 mètres. L'extrémité supérieure 5 est rattachée par l'intermédiaire par exemple de vis au niveau d'une jonction 50 à un chaudron 51 de manière à former une cavité 52. Ainsi la transition électriquement isolante électrique comprend au moins deux parties solidaires mais démontables l'une par rapport à l'autre, qui sont d'une part l'isolateur électrique comprenant notamment le barreau 1 et le revêtement 3 et d'autre part un chaudron 51 situé à une extrémité de l'isolateur électrique. La modularité de la transition électriquement isolante est rendue possible par l'aspect solide du barreau, au contraire de certains autres systèmes dans l'art antérieur qui présentaient des transitions électriquement isolantes dont l'intérieur était rempli d'un liquide électriquement isolant. La modularité de la transition électriquement isolante est avantageuse dans la mesure où elle permet une gestion plus efficace des stocks.

A l'intérieur de la cavité 52 du chaudron 51 se trouve une cassette 4 de rangement des soudures à fibres optiques reliant le câble 2 à des fibres optiques 40 qui se rejoignent dans un câble de phase 7 à l'extérieur du chaudron 51. L'excès de longueur du câble 2 lové dans la cassette 4 peut atteindre typiquement quelques mètres, par exemple 5 mètres. Le câble 2 est souple par opposition au tube rigide de protection de l'art antérieur précité, il peut faire des légers coudes à l'extérieur de l'isolateur électrique notamment pour aller rejoindre la borne optique de raccordement. Le câble 2 est entièrement diélectrique.

La figure 2 représente schématiquement une vue en coupe transversale de l'isolateur électrique représenté à la figure 1. Le barreau diélectrique 1 présente au moins une fente 10. Le barreau 1 peut présenter plusieurs fentes régulièrement réparties sur la périphérie du barreau, chaque fente comportant un câble à fibres optiques, par exemple deux fentes diamétralement opposées. La fente 10 présente une largeur l et une profondeur p. La profondeur p est supérieure à la largeur l et de préférence supérieure à au moins une fois et demie la largeur l, par exemple de l'ordre de deux fois la largeur l. La profondeur p de la fente 10 est de préférence supérieure à une fois et demie le diamètre d du câble 2, et avantageusement supérieure à deux fois le diamètre d du câble 2. La profondeur p de la fente 10 est avantageusement comprise entre 15mm et 25mm, elle vaut par exemple environ 20mm. Le câble 2 est situé dans la fente 10, vers le fond de la fente 10, c'est-à-dire plus près du fond 12 de la fente 10 que de l'ouverture 11 de la fente 10. Le câble 2 est au fond de la fente 10 ; sur la figure 2, il touche le fond 12 de la fente 10.

Tout l'espace situé entre le barreau 1 et le câble 2 est rempli par un matériau 8 de remplissage de la fente 10 et de maintien, sans contrainte, du câble 2 dans la fente 10. Tout l'espace situé entre le barreau 1 et le câble 2 est rempli, c'est-à-dire qu'aucun autre matériau que ledit matériau 8, comme le serait par exemple le tube de protection de l'art antérieur précité, n'est situé entre le barreau 1 et le câble 2 et qu'il n'y a pas de vide substantiel dans la fente 10. Ledit matériau 8 maintient le câble 2 dans la fente 10, c'est-à-dire qu'il l'empêche de sortir de la fente 10 et qu'il l'empêche de bouger librement dans la fente 10. Ledit matériau 8 maintient sans contrainte le câble 2, c'est-à-dire que ledit matériau 8 n'exerce aucune contrainte mécanique sur le câble 2 qui pourrait dégrader sensiblement la transmission optique dans le câble 2. Ledit matériau 8 sera appelé matériau 8 diélectrique de remplissage et de maintien. Le matériau 8 de remplissage et de maintien a aussi pour fonction de protéger le câble 2 en absorbant la pression exercée par le revêtement 3 surtout lors du montage du revêtement 3 sur le barreau 1 par exemple par moulage ; pour cela, le matériau 8 de remplissage et de maintien doit être suffisamment mou. Le matériau 8 de remplissage et de maintien est diélectrique de façon à être électriquement isolant et thermiquement résistant de façon à pouvoir assurer sa fonction de maintien du câble 2 dans la fente 10. Le matériau 8 de remplissage et de maintien est par exemple une pâte ou une colle de silicone. De préférence, l'adhésion entre le matériau 8 de remplissage et de maintien et le barreau 1 est au moins égale à l'adhésion entre le revêtement 3 et le barreau 1, de manière à ne pas détériorer les propriétés isolantes de l'isolateur électrique.

Le revêtement 3 est monobloc, solidaire du barreau 1 et en contact direct avec le barreau 1, c'est-à-dire notamment qu'il n'y a pas de couche de colle entre le barreau 1 et le revêtement 3 comme dans les autres modes de réalisation. Le revêtement 3 présente des protubérances 30, vers l'extérieur, en forme de jupes.

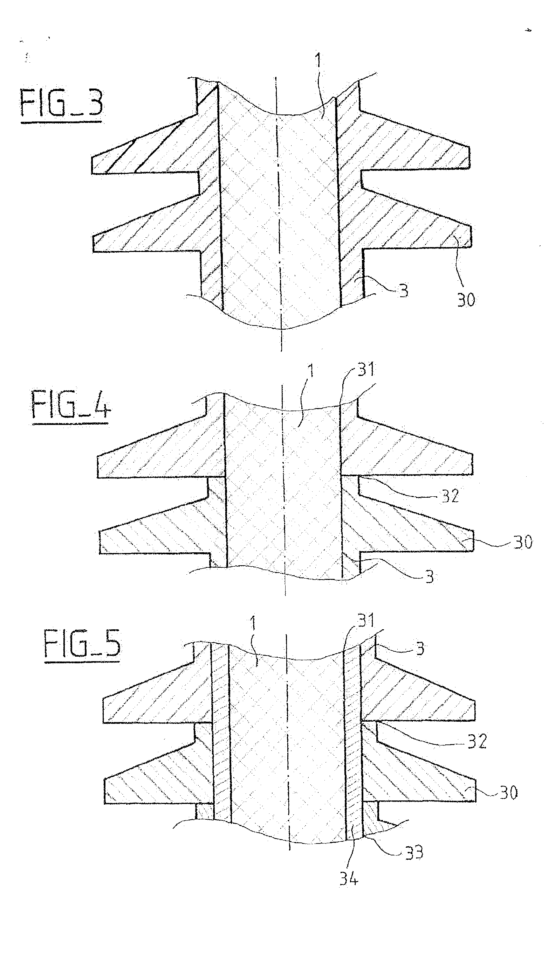

La figure 3 représente schématiquement un agrandissement d'une vue en coupe longitudinale de l'isolateur électrique représenté à la figure 1. Le barreau 1 est entouré par le revêtement 3 monobloc présentant des jupes 30. Le revêtement 3 est en contact direct avec le barreau 1. Le revêtement 3 est solidaire du barreau 1. Le revêtement 3 a été de préférence moulé sur le barreau 1 et rendu solidaire avantageusement par vulcanisation.

Sur les figures 4 et 5 seules les différences entre les premier et deuxième modes de réalisation d'une part et le troisième mode de réalisation d'autre part sont mises en évidence, le reste étant supposé identique ou similaire, sauf mention contraire.

La figure 4 représente schématiquement un agrandissement d'une vue en coupe longitudinale d'un premier mode de réalisation d'un isolateur électrique selon l'invention. Le revêtement 3 est constitué d'un empilement de jupes 30 collées les unes sur les autres par une colle 32. Les jupes 30 sont également collées sur le barreau 1 à l'aide d'une colle 31 identique ou différente de la colle 32.

La figure 5 représente schématiquement un agrandissement d'une vue en coupe longitudinale d'un second mode de réalisation d'un isolateur électrique selon l'invention. Le revêtement 3 est constitué d'un empilement de jupes 30 collées les unes sur les autres par une colle 32. Les jupes 30 sont également collées sur un tube intermédiaire 34 à l'aide d'une colle 33 identique ou différente de la colle 32. Le tube intermédiaire 34 est quant à lui collé sur le barreau 1 à l'aide d'une colle 31 identique ou différente des colles 32 et 33. Le tube intermédiaire 34 est situé entre le barreau 1 et le revêtement 3 constitué par les jupes 30 empilées les unes sur les autres et collées les unes aux autres. De préférence, le tube intermédiaire 34 et le revêtement 3 sont constitués du même matériau afin de faciliter leur collage entre eux.

La figure 6 représente schématiquement une vue en coupe transversale d'un mode de réalisation préférentiel du câble 2 situé dans la fente 10 du barreau 1 d'un isolateur électrique selon l'invention. Le câble 2 à fibres optiques est un câble de télécommunication, ce qui rend l'aspect protection du câble 2 d'autant plus important. Le câble 2 est appelé microcâble. De préférence, le diamètre du câble 2 à fibres optiques est compris entre 5mm et 10mm. De préférence, le câble 2 à fibres optiques comporte un élément de renfort central 21 autour duquel sont disposés des tubes 22 comportant des fibres optiques 23, les tubes 22 étant entourés par une gaine extérieure 26.

Plus précisément et à titre d'exemple, le câble 2 contient 72 fibres optiques au total et présente un diamètre d d'environ 8mm. Le câble 2 comporte un élément de renfort central 21 qui est entouré par 6 tubes 22 en polyamide contentant 12 fibres optiques 23 chacun et étant chacun rempli avec une gelée thixotropique 24. Les espaces entre tubes 22 sont remplis par un matériau 25 de protection contre l'humidité, ledit matériau présentant une viscosité très élevée. Une gaine extérieure 26 en polyamide entoure l'ensemble des tubes 22. Une couche 27 de liant fait d'un matériau poreux afin de permettre la polymérisation du matériau 25 tapisse la gaine extérieure 26.

## Revendications

1. Isolateur électrique comportant
un barreau diélectrique (1) comprenant au moins une fente (10),
un câble (2) à fibres optiques (23) situé dans la fente (10),
un matériau (8) diélectrique de remplissage de la fente (10) et de maintien, sans contrainte, du câble (2) dans la fente (10),
un revêtement (3) diélectrique entourant le barreau (1) et présentant, vers l'extérieur, des protubérances (30) en forme de jupes,
**caractérisé en ce que** le câble (2) est souple,
et **en ce que** tout l'espace situé entre le barreau (1) et le câble (2) est rempli par ledit matériau (8) diélectrique de remplissage et de maintien.

2. Isolateur électrique selon la revendication 1,
**caractérisé en ce que** la fente (10) est plus profonde que large,
**en ce que** le câble (2) est situé plus près du fond (12) de la fente (10) que de l'ouverture (11) de la fente (10),
et **en ce que** le revêtement (3) est monobloc, solidaire du barreau (1), et directement en contact avec le barreau (1).

3. Isolateur électrique selon la revendication 2, **caractérisé en ce que** la profondeur (p) de la fente (10) est comprise entre 15mm et 25mm.

4. Isolateur électrique selon la revendication 1, **caractérisé en ce que** le revêtement (3) comporte plusieurs jupes (30) empilées les unes sur les autres.

5. Isolateur électrique selon la revendication 4, **caractérisé en ce que** l'isolateur électrique comporte aussi un tube intermédiaire (34) situé entre le barreau (1) et le revêtement (3).

6. Isolateur électrique selon la revendication 5, **caractérisé en ce que** le tube intermédiaire (34) et le revêtement (3) sont constitués du même matériau.

7. Isolateur électrique selon l'une quelconque des revendications précédentes, **caractérisé en ce que** le barreau (1) comprend plusieurs fentes (10) régulièrement réparties sur sa périphérie.

8. Isolateur électrique selon l'une quelconque des revendications précédentes, **caractérisé en ce que** le barreau (1) est en fibre de verre.

9. Isolateur électrique selon l'une quelconque des revendications précédentes, **caractérisé en ce que** le matériau (8) de remplissage et de maintien est une pâte de silicone qui est thermiquement résistante.

10. Isolateur électrique selon l'une quelconque des revendications précédentes, **caractérisé en ce que** le câble (2) à fibres optiques (23) est un câble de télécommunication.

11. Isolateur électrique selon l'une quelconque des revendications précédentes, **caractérisé en ce que** le diamètre (d) du câble (2) à fibres optiques (23) est compris entre 5mm et 10mm.

12. Isolateur électrique selon l'une quelconque des revendications précédentes, **caractérisé en ce que** le câble (2) à fibres optiques (23) comporte un élément de renfort central (21) autour duquel sont disposés des tubes (22) comportant lesdites fibres optiques (23), lesdits tubes (22) étant entourés par une gaine extérieure (26).

13. Transition électriquement isolante comportant un isolateur électrique selon l'une quelconque des revendications précédentes, **caractérisée en ce que** la transition électriquement isolante comprend au moins deux parties solidaires mais démontables l'une par rapport à l'autre, qui sont d'une part l'isolateur électrique et d'autre part un chaudron (51) situé à une extrémité (5) de l'isolateur électrique.

14. Transition électriquement isolante selon la revendication 13, **caractérisée en ce que** le chaudron (51) comporte une cassette (4) de rangement des soudures de fibres optiques.

15. Système comportant au moins un câble optique de phase (7) relié à une transition électriquement isolante comprenant un isolateur électrique selon l'une quelconque des revendications 1 à 12 ou bien à une transition électriquement isolante selon l'une quelconque des revendications 13 à 14.
